# EUROPÄISCHE PATENTSCHRIFT

(11) **EP 1 842 867 B1**
(45) Veröffentlichungstag und Bekanntmachung des Hinweises auf die Patenterteilung: **12.08.2015**
(21) Anmeldenummer: 07006152.8
(22) Anmeldetag: 26.03.2007
(51) Int. Cl.: C08G 18/66, C08G 18/67, C08G 18/78, C09D 175/16, C08G 18/81

(54) **Verfahren zur Herstellung von allophanathaltigen, durch aktinische Strahlung härtbaren Polyurethanprepolymeren mit erhöhter Beständigkeit**
Method for manufacturing polyurethane prepolymers containing allophanate with increased durability and temperable via actinic radiation
Procédé de fabrication de prépolymères de polyuréthane contenant des allophanes, durcissables par rayonnement actinique, à haute résistance

(30) Priorität: 04.04.2006 DE 102006015709
(43) Veröffentlichungstag der Anmeldung: 10.10.2007
(73) Patentinhaber: Allnex IP S.à.r.l., 1660 Luxembourg (LU)
(72) Erfinder: Ludewig, Michael, Dr., 51373 Leverkusen (DE); Weikard, Jan, Dr., 51519 Odenthal-Erberich (DE); Stoeckel, Nicolas, Dr., 50733 Köln (DE); Fischer, Wolfgang, Dr., 40668 Meerbusch (DE)
(74) Vertreter: Destryker, Elise Martine

(56) Entgegenhaltungen:
- DE-A1-102004 012 902
- DATABASE WPI Week 198650 Thomson Scientific, London, GB; AN 1986-328404 XP002445600 & JP 61 243815 A (NIPPON SYNTHETIC CHEM IND CO) 30. Oktober 1986 (1986-10-30)

## Beschreibung

Die vorliegende Erfindung betrifft ein einfaches Verfahren zur Herstellung von niedrigviskosen, allophanathaltigen und NCO-freien Polyurethanprepolymeren mit erhöhter Funktionalität, die durch aktinische Strahlung härtbar sind, sowie die nach diesem Verfahren erhältlichen Produkte und deren Verwendung als besonders beständige und elastische Lackbindemittel.

Die Härtung von aktivierten Doppelbindungen tragenden Beschichtungssystemen durch aktinische Strahlung, wie z.B. UV-Licht, IR-Strahlung oder auch Elektronenstrahlung ist bekannt und technisch etabliert. Es ist eine der schnellsten Härtungsmethoden in der Beschichtungstechnologie. Auf diesem Prinzip basierende Beschichtungsmittel werden als strahlen- oder aktinisch-härtende bzw. härtbare Systeme bezeichnet.

Sehr einfache flexible Urethanacrylatprepolymere können hergestellt werden, indem NCO-Prepolymere auf Basis eines Polyester-, Polyether- oder Polycarbonatpolyols mit einer OH-funktionellen Verbindung mit aktivierten Doppelbindungen, wie z.B. Hydroxyalkylacrylaten umgesetzt werden (P.K.T. Oldring (Ed.): Vol. 2 "Prepolymers and Reactive Diluents for UV and EB Curable Formulations", 1991, S105ff). Abhängig von der Art und dem Molekulargewicht des eingesetzten Polyols können dabei durchaus sehr flexible und elastische durch aktinische Strahlung härtbare Bindemittel entstehen. Nachteilig dabei ist allerdings die üblicherweise hohe Viskosität solcher Systeme, die häufig den Einsatz von Reaktivverdünnern nötig macht. Weiterhin sind solche Systeme bei recht hohem Molekulargewicht nicht sehr hochfunktionell, was sich negativ auf die Reaktivität und die Beständigkeit gegen Lösemittel auswirkt.

Einen signifikanten Vorteil hinsichtlich der Viskosität bieten Systeme, wie sie z.B. in der europäischen Anmeldung EP 1 700 873 beschrieben werden. Hier werden die im Prepolymer enthaltenen Urethangruppen durch Reaktion mit Monoisocyanaten zu Allophanaten umgesetzt, was die Viskosität der Bindemittel deutlich senkt. Das Problem der geringen Funktionalität und damit geringen Beständigkeit wird allerdings nicht adressiert.

Auf der anderen Seite eignet sich die Methode der Allophanatisierung, wie sie z.B. in der GB 994,890 oder der EP 682 012 beschrieben wird, aber durchaus, um die Funktionalität eines Bindemittels zu erhöhen. So werden in den Anmeldungen WO 2005/097737 oder WO 2005/097865 z.B. Prepolymere auf der Basis von difunktionellen Polyethern beschrieben, die über Urethanisierung und anschließende Allophanatisierung zu tetrafunktionellen NCO-Prepolymeren umgesetzt werden. Eine weitere Umsetzung mit Hydroxyalkylacrylaten würde allerdings zu einem recht umständlichen und wenig vorteilhaften Prozess führen, der neben zwei getrennten Reaktionsvorgängen auch eine Destillation des überschüssigen Diisocyanates beinhaltet.

Ebenso möglich ist es, ein Acrylat- und NCO-haltiges Allophanat, wie es in der EP 1 144 476 B1 beschrieben steht, in einem zusätzlichen Schritt mit weiterem Hydroxyalkyl(meth)acrylat und einem Polyester-, Polyether- oder Polycarbonatpolyol umzusetzen. Diese Verfahrensweise führt zwar ebenfalls zu dem zuvor beschriebenen mehrfunktionellen Prepolymeren, spart aber weder die Destillation der Produkte, noch einen der beiden Reaktionsvorgänge ein. Zusätzlich birgt dieser Prozess die Schwierigkeit, dass der Destillationsschritt bei Temperaturen bis zu 135°C verlaufen muss, um den Rest-Isocyanatgehalt ausreichend senken zu können (< 0,5 Gew.-% Restmonomer). Es besteht die Gefahr, dass während der Aufreinigung bereits Doppelbindungen thermisch initiiert unter Polymerisation reagieren, so dass keine einwandfreien Produkte mehr erhalten werden.

Es ist ebenfalls möglich, Allophanate indirekt, aus anderen Isocyanatderivaten, als Urethanen und Isocyanaten herzustellen. So beschreibt die EP-A 0 825 211 ein Verfahren zum Aufbau von Allophanatstrukturen aus Oxadiazintrionen; ein weiterer Weg ist die Öffnung von Uretdionen (vgl. Proceedings of the International Waterborne, High-Solids, and Powder Coatings Symposium 2001, 28th, 405-419 sowie US-A 2003 0153713) zu Allophanat-Strukturen. In beiden Fällen führt ein Einsatz von Polyester-, Polyether- oder Polycarbonatpolyolen entweder zur Ringöffnung oder schon bei der Urethanisierung zu den Zielprodukten. Allerdings benötigen beide Wege veredelte Rohstoffe als Ausgangsmaterial und führen nur zu einem an Nebenprodukten reichen Allophanatprodukt.

DE-A 10 2004 012 902 offenbart ein Verfahren zur Herstellung strahlenhärtbarer allophanatgruppenhaltiger Bindemittel durch Öffnung von Uretdion- und NCO-funktionellen Verbindungen mit OH-gruppenhaltigen Verbindungen. Nachteilig bei diesem Verfahren ist der Einsatz veredelter Produkte als Ausgangsmaterial. Das Problem der geringen Beständigkeit gegenüber Lösungsmitteln wird nicht adressiert.

JP-A 61-243815 offenbart eine Harzzusammensetzung mit thixotropen Eigenschaften, enthaltend ein allophanathaltiges Urethan-Prepolymer und Styrol. Die speziellen thixotropen Eigenschaften werden bestimmt durch das Verhältnis der Allophanatgruppen zu Urethangruppen, die ausschließliche Verwendung von Toluoldiisocyanat zum Aufbau des Prepolymers, sowie die Verwendung Styrol in der Harzzusammensetzung. Nachteilig bei diesem Verfahren sind die zur Allophanatisierung erforderlichen hohen Temperaturen, da diese zur Polymerisation der strahlenhärtbaren Gruppen führten. Der Aufbau des Prepolymers erfolgt daher durch Umsetzung des Toluoldiisocyanats mit Polyol bei erhöhten Temperaturen unter Allophanatbildung und anschließender Umsetzung mit dem OH-gruppenhaltigen Vinylmonomer bei niedrigeren Temperaturen, um die Polymerisation zu verhindern.

Aus EP-B 694 531 wird ein mehrstufiges Verfahren zur Herstellung hydrophilierter Allophanate mit strahlenhärtenden Gruppen beschrieben. Dabei wird jedoch zunächst ein NCO- und acrylatfunktionelles Urethan hergestellt, welches hydrophiliert wird und anschließend nach Zugabe eines weiteren NCO- und acrylatfunktionellen Urethans allophanatisiert wird. Als Verfahrenstemperatur zur Allophanatisierung werden recht hohe Temperaturen von 100 bis 110°C angegeben, die zu einer unerwünschten radikalischen Polymerisation führen können.

In der europäischen Anmeldung EP 1 645 582 wird nun ein Verfahren beschrieben, dass die Herstellung von strahlenhärtenden, allophanathaltigen Bindemitteln auf Basis von leicht verfügbaren Rohstoffen, wie Polyisocyanaten und Polyolen, in einem Prozess bereits bei moderater Temperatur von unter 100°C ohne Destillationschritt erlaubt. Die aus diesen Beschichtungsmitteln hergestellten Beschichtungen zeigen eine hohe Härte, besitzen allerdings eine verbesserungswürdige Elastizität und eine verbesserungswürdige Lösemittelbeständigkeit.

Es war daher die Aufgabe der vorliegenden Erfindung aktinisch härtbare Bindemittel zur Verfügung zu stellen, die zu Beschichtungen fuhren, die hinsichtlich ihrer Elastizität und Beständigkeit gegenüber Lösemitteln verbesserte Eigenschaften aufweisen.

Es wurde nun gefunden, dass, ausgehend von den in der europäischen Anmeldung mit der Anmeldenummer 05020859.4 beschriebenen strahlenhärtenden, allophanathaltigen Bindemitteln, gerade dann Produkte erhalten werden, die diese Anforderungen erfüllen, wenn bei der Synthese der Bindemittel spezielle Polyole zum Einsatz kommen.

Gegenstand der Erfindung ist daher ein Verfahren zur Herstellung von strahlenhärtenden, allophanathaltigen Prepolymeren mit Restmonomergehalten von weniger als 0,5 Gew.-% und einem NCO-Gehalt von weniger als 1 Gew.-%, bei dem aus
A) Diisocyanaten,
B) hydroxyfunktionellen Verbindungen, die unter Einwirkung aktinischer Strahlung mit ethylenisch ungesättigten Verbindungen unter Polymerisation reagierende Gruppen (strahlenhärtende Gruppen) aufweisen und
C) Polyester-, Polyether- oder Polycarbonatpolyolen mit einer Funktionalität von mindestens 1,9 und einem zahlenmittleren Molekulargewicht (Mₙ) von mindestens 1.000 g/mol
D) gegebenenfalls in Anwesenheit eines Katalysators NCO-gruppenhaltige Prepolymere mit strahlenhärtenden Gruppen gebildet werden, die anschließend
E) gegebenenfalls nach Zugabe von monofunktionellen Isocyanaten in Anwesenheit
F) eines Allophanatisierungskatalysators zu allophanathaltigen Prepolymeren umgesetzt werden,
wobei das Verhältnis von NCO-Gruppen der Verbindungen aus A) zu den OH-Gruppen von den Verbindungen aus B) und C) 1,45 : 1,0 bis 1,1 : 1,0 beträgt und das Verhältnis der OH-Gruppen aus B) zu den OH-Gruppen aus C) 8,0 : 1 bis 1,5 : 1 beträgt.

Darüber hinaus sind die nach dem erfindungsgemäßen Verfahren erhältlichen Bindemittel ein Gegenstand der Erfindung.

Bevorzugt beträgt das Verhältnis von NCO-Gruppen der Verbindungen aus A) zu den OH-Gruppen von den Verbindungen aus B) und C) 1,43 : 1,0 bis 1,2 : 1,0, besonders bevorzugt 1,35: 1,0 bis 1,3 : 1,0.

Bevorzugt beträgt das Verhältnis der OH-Gruppen aus B) zu den OH-Gruppen aus C) 5,0 : 1 bis 2,0: 1.

Als Diisocyanate A) kommen aromatische, aliphatische und cycloaliphatische Diisocyanate in Betracht. Geeignete Diisocyanate sind Verbindungen der Formel Q(NCO)₂ mit einem mittleren Molekulargewicht unter 800, worin Q einen aromatischen C₆-C₁₅-Kohlenwasserstoffrest, einen aliphatischen C₄-C₁₂-Kohlenwasserstoffrest oder einen cycloaliphatischen C₆-C₁₅-Kohlenwasserstoffrest bedeuten, beispielsweise Diisocyanate aus der Reihe 2,4-/2,6-Toluoldiisocyanat (TDI), Methylendiphenyldiisocyanat (MDI), Naphtyldiisocyanat (NDI), 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methyl-pentamethylendiisocyanat, 2,2,4-Trimethylhexamethylendiisocyanat (THDI), Dodecamethylendiisocyanat, 1,4-Diisocyanato-cyclohexan, 4,4'-Diisocyanato-3,3'-dimethyl-dicyclohexyhnethan, 4,4'-Diisocyanatodicyclohexylpropan-(2,2), 3-Isocyanatomethyl-1-methyl-1-isocyanatocyclohexan (MCI), 1,3-Diisooctylcyanato-4-methyl-cyclohexan, 1,3-Diisocyanato-2-methyl-cyclohexan und α,α,α',α'-Tetramethyl-m- oder -p-xylylen-diisocyanat (TMXDI) sowie aus diesen Verbindungen bestehende Gemische.

Ebenfalls geeignet als isocyanathaltige Verbindungen A) sind Umsetzungsprodukte der vorgenannten Isocyanate mit sich selbst oder untereinander zu Uretdionen. Beispielhaft genannt sei Desmodur^{®} N3400 (Bayer MaterialScience, Leverkusen, DE).

Bevorzugt als Komponente A) ist die Verwendung von monomeren Diiisocyanaten. Ganz besonders bevorzugt ist die Verwendung von Hexamethylendiisocyanat (HDI), Isophorondiisocyanat (IPDI) und/oder 4,4'-Diisocyanatodicyclohexylmethan.

Unter aktinischer Strahlung wird elektromagnetische, ionisierende Strahlung verstanden, insbesondere Elektronenstrahlen, UV-Strahlen sowie sichtbares Licht (Roche Lexikon Medizin, 4. Auflage; Urban & Fischer Verlag, München 1999).

Unter Einwirkung aktinischer Strahlung mit ethylenisch ungesättigten Verbindungen unter Polymerisation reagierende Gruppen (strahlenhärtende Gruppen) werden im Rahmen der vorliegenden Erfindung Vinylether-, Maleinyl-, Fumaryl-, Maleinimid-, Dicyclopentadienyl-, Acrylamid-, Acryl- und Methacryl-Gruppen verstanden, wobei dies bevorzugt Vinylether-, Acrylat- und/oder Methacrylat-Gruppen, besonders bevorzugt Acrylatgruppen sind.

Beispielsweise geeignete hydroxylgruppenhaltige Verbindungen der Komponente B) sind 2-Hydroxyethyl(meth)acrylat, Polyethylenoxid-mono(meth)acrylat (z.B. PEA6 / PEM6; Laporte Performance Chemicals Ltd., UK), Polypropylenoxidmono(meth)acrylat (z.B. PPA6, PPM5S; Laporte Performance Chemicals Ltd., UK), Polyalkylenoxidmono(meth)acrylat (z.B. PEM63P, Laporte Performance Chemicals Ltd. , UK), Poly(ε-caprolacton)mono(meth)acrylate wie z.B. Tone M100^{®} (Dow, Schwalbach, DE), 2-Hydroxypropyl(meth)acrylat, 4-Hydroxybutyl(meth)acrylat, Hydroxybutylvinylether, 3-Hydroxy-2,2-dimethylpropyl(meth)acrylat, die hydroxyfunktionellen Mono-, Di- oder soweit möglich höheren Acrylate wie z.B. Glycerindi(meth)acrylat, Trime-thylolpropandi(meth)acrylat, Pentaerythrittri(meth)acrylat oder Dipentaerythritpenta(meth)acrylat, die durch Umsetzung mehrwertiger gegebenenfalls alkoxylierter Alkohole wie Trimethylolpropan, Glycerin, Pentaerythrit, Dipentaerythrit zugänglich sind.

Ebenfalls geeignet als Bestandteil von B) sind auch Alkohole, die sich aus der Umsetzung von doppelbindungshaltigen Säuren mit gegebenenfalls doppelbindungshaltigen Epoxidverbindungen erhalten werden, so z.B. die Umsetzungsprodukte von (Meth)acrylsäure mit Glycidyl(meth)acrylat oder Bisphenol-A-diglycidylether.

Darüber hinaus können ebenfalls ungesättigte Alkohole eingesetzt werden, die aus der Umsetzung von gegebenenfalls ungesättigten Säureanhydriden mit gegebenenfalls acrylatgruppenhaltigen Hydroxy- und Epoxidverbindungen erhalten werden. Beispielsweise sind dies die Umsetzungsprodukte von Maleinsäureanhydrid mit 2-Hydroxyethyl(meth)acrylat und Glycidyl(meth)acrylat.

Besonders bevorzugt entsprechen die Verbindungen der Komponente B) der vorgenannten Art und weisen eine OH-Funktionalität von 0,9 bis 1,1.

Bevorzugt ist die Verwendung von Hydroxyethyl(meth)acrylat, Hydroxypropyl(meth)acrylat und/oder Hydroxybutyl(meth)acrylat. Ganz besonders bevorzugt sind Hydroxyethylacrylat und/oder Hydroxypropylacrylat.

Neben den OH-funktionellen ungesättigten Verbindungen der Komponente B) werden im erfindungsgemäßen Verfahren auch Polyether, Polyester oder Polycarbonate als Verbindungen C) eingesetzt, die ein mittleres Molekulargewicht Mₙ von mindestens 1000g/mol und eine OH-Funktionalität von mindestens 1,9 aufweisen.

Bevorzugt werden Polyether- Polyester- und Polycarbonatdiole eingesetzt, die eine Funktionalität von 1,9 bis 2,1 und ein zahlenmittleres Molekulargewicht von 1000 bis 4000 g/mol aufweisen. Besonders bevorzugt sind Polyether- und Polyesterdiole mit einer Funktionalität von 1,95 bis 2,0 und einem zahlenmittleren Molekulargewicht von 1000 bis 2000 g/mol.

Als Polyetherdiole geeignet sind die in Polyurethan-Chemie üblichen Polyether, wie z.B. die unter Verwendung von zweiwertigen Startermolekülen wie Wasser oder den nachfolgend genannten Diolen oder 1- bis 2-NH-Bindungen aufweisenden Aminen hergestellten Additions- bzw. Mischadditionsverbindungen des Tetrahydrofurans, Styroloxids, Ethylenoxids, Propylenoxids, der Butylenoxide oder des Epichlorhydrins, insbesondere des Ethylenoxids und/oder des Propylenoxids. Bevorzugt sind Propylenoxidpolyether, die bis zu 50 Gew.-% eingebaute Polyethylenoxid-Einheiten enthalten können.

Als geeignete niedermolekulare Startermoleküle für solche Polyether können in der Polyurethan-Chemie übliche Diole, mit Molekulargewichten von 62 bis 399, wie Ethylenglykol, Triethylenglykol, Tetraethylenglykol, Propandiol-1,2 und -1,3, Butandiol-1,4 und -1,3, Hexandiol-1,6, Octandiol-1,8, Neopentylglykol, 1,4-Bis(hydroxymethyl)cyclohexan, Bis(hydroxymethyl)tricyclo[5.2.1.0^{2.6}]decan oder 1,4-Bis(2-hydroxyethoxy)benzol, 2-Methyl-1,3-propandiol, 2,2,4-Trimethylpentandiol, 2-Ethyl-1,3-hexandiol, Dipropylenglykol, Polypropylenglykole, Dibutylenglykol, Polybutylenglykole, Bisphenol A, Tetrabrombisphenol A verwendet werden.

Es ist dabei sowohl denkbar, klassische Polyether, die auf Basis einer Katalyse mit z.B. Kaliumhydroxid hergestellt werden, einzusetzen, als auch solche Polyether, die mit den neueren Verfahren auf Basis der Doppelmetallcyanid-Katalysatoren hergestellt werden. Letztere Polyether haben in der Regel einen besonders niedrigen Gehalt an terminaler Unsättigung von weniger als 0,07 meq/g, enthalten deutlich weniger Monole und haben in der Regel eine geringe Polydispersität von weniger als 1,5.

Als Polyesterpolyole geeignet sind z.B. Umsetzungsprodukte von zweiwertigen Alkoholen mit zweibasischen Carbonsäuren. Anstelle der freien Dicarbonsäuren können auch die entsprechenden Dicarbonsäureanhydride oder entsprechende Dicarbonsäureester von niedrigen Alkoholen oder deren Gemische zur Herstellung der Polyester verwendet werden. Die Dicarbonsäuren können aliphatischer, cycloaliphatischer aromatischer und/oder heterocyclischer Natur sein und gegebenenfalls z.B. durch Halogenatome substituiert und/oder ungesättigt sein. Beispielhaft sind genannt Adipinsäure, Phthalsäure, Isophthalsäure, Bernsteinsärue, Korksäure, Azelainsäure, Sebacinsäure, Phthalsäureanhydrid, Tetrahydrophthalsäureanhydrid, Glutarsäureanhydrid, Tetrachlorphthalsäureanhydrid, Endomethylentetrahydrophthalsäureanhydrid, Maleinsäureanhydrid, Maleinsäure, Fumarsäure, dimere Fettsäuren wie Ölsäure, Terephthalsäuredimethylester oder Terephthalsäure-bis-glykolester. Bevorzugt sind unterhalb 60°C schmelzende Hydroxypolyester.

Die in Frage kommenden Polycarbonatdiole sind durch Reaktion von Kohlensäurederivaten, z.B. Diphenylcarbonat, Dimethylcarbonat oder Phosgen, mit Diolen erhältlich. Als derartige Diole kommen z.B. Ethylenglykol, Triethylenglykol, Tetraethylenglykol, Propandiol-1,2 und -1,3, Butandiol-1,4 und -1,3, Pentandiol-1,5, Hexandiol-1,6, Octandiol-1,8, Neopentylgkylol, 1,4-Bis-(hydroxymethyl)cyclohexan, Bis(hydroxymethyl)tricyclo[5.2.1.0^{2.6}]decan oder 1,4-Bis(2-hydroxy-ethoxy)benzol, 2-Methyl-1,3-propandiol, 2,2,4-Trimethylpentandiol, Dipropylenglykol, Polypropylenglykole, Dibutylenglykol, Polybutylenglykole, Bisphenol A und Tetrabrombisphenol A oder Mischungen der genannten Diole in Frage. Bevorzugt erhält die Diolkomponente 40 bis 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß DE-A 1 770245, oder durch Veretherung von Hexandiol mit sich selbst zum Di- oder Trihexylenglykol erhalten wurden. Die Herstellung solcher Derivate ist z.B. aus der DE-A 1 570 540 bekannt. Auch die in der DE-A 3 717 060 beschriebenen Polyether-Polycarbonatdiole können sehr gut eingesetzt werden.

Als Verbindungen der Katalysatorkomponente D) kommen dem Fachman an sich bekannte Urethanisierungskatalysatoren wie Organozinnverbindungen oder aminische Katalysatoren in Frage. Als Organozinnverbindungen seien beispielhaft genannt: Dibutylzinndiacetat, Dibutylzinndilaurat, Dibutylzinn-bis-acetoacetonat und Zinncarboxylate wie beispielsweise Zinnoctoat. Die genannten Zinnkatalysatoren können gegebenenfalls in Kombination mit aminischen Katalysatoren wie Aminosilanen oder 1,4-Diazabicyclo[2.2.2]octan verwendet werden.

Besonders bevorzugt wird in D) Dibutylzinndilaurat als Urethanisierungskatalysator eingesetzt.

Im erfindungsgemäßen Verfahren wird die Katalysatorkomponente D) sofern überhaupt mitverwendet in Mengen von 0,001 bis 5,0 Gew.-%, bevorzugt 0,001 bis 0,1 Gew.-% und besonders bevorzugt 0,005 bis 0,05 Gew.-% bezogen auf Festgehalt des Verfahrensprodukts eingesetzt.

Als Komponente E) finden Monoisocyanate der allgemeinen Formel R-NCO Verwendung, wobei R bevorzugt ein Alkylrest mit 1 bis 20 C-Atomen oder Arylrest mit 6 bis 20 C-Atomen ist, wobei die genannten Alkyl- oder Arylreste neben der NCO-Funktion noch andere funktionelle Gruppen haben können, die jedoch weder Isocyanatgruppen noch von NCO-Gruppen abgeleitete Strukturen haben.

Beispielsweise geeignete Monoisocyanate sind Methylisocyanat, Isopropylisocyanat, n-Butylisocyanat, tert.-Butylisocyanat, n-Hexylisocyanat, Cyclohexylisocyanat, Stearylisocyanat, Phenylisocyanat (einschl. chlorierte Formen), 1-Naphtylisocyanat, Tolyolisocyanat (meta, para und ortho-Form, einschl. fluorierte und chlorierte Formen), p-Isopropylphenylisocyanat, 2,6-Diisopropylphenylisocyanat und p-Toluolsulfonyldiisocyanat. Bevorzugte Monoisocyanate sind n-Butyl- oder n-Hexylisocyanat.

Das für die Allophanatbildung eingesetzte Monoisocyanat kann bezogen auf die im ersten Schritt gebildeten Urethangruppen der Ausgangsverbindung im Unterschuss oder äquimolar eingesetzt werden. Wenn Monoisocyanate eingesetzt werden ist es bevorzugt, pro 1,0 mol der im ersten Schritt gebildeten Urethangruppen 0,1 bis 1,0 mol Monoisocyanat einzusetzen, besonders bevorzugt ist dabei der Einsatz von 0,5 bis 1,0 mol Monoisocyanat.

Als Katalysator F) können dem Fachmann an sich bekannte Allophanatisierungskatalysatoren, wie die Zinksalze Zinkoctoat, Zinkacetylacetonat und Zink-2-ethylcaproat, oder Tetraalkylammoniumverbindungen, wie *N*,*N*,*N-*Trimethyl-*N*-2-hydroxypropylammoniumhydroxid, *N*,*N*,*N*-Trimethyl-*N*-2-hydroxypropylammonium-2-ethylhexanoat oder Cholin-2-ethylhexanoat verwendet werden. Bevorzugt ist die Verwendung der Tetraalkylammoniumverbindungen oder von Zinkoctoat, besonders bevorzugt diejenige von Cholin-2-ethylhexanoat oder Zinkoctoat als Allophanatisierungskatalysator.

Der Allophanatisierungskatalysator wird in Mengen von 0,001 bis 5,0 Gew.-%, bevorzugt 0,001 bis 2,0 Gew.-% und besonders bevorzugt 0,05 bis 0,5 Gew.-% bezogen auf Festgehalt des Verfahrensprodukts eingesetzt.

Grundsätzlich kann schon für die Urethanisierungsreaktion in D) der Allophanatisierungskatalysator F) verwendet werden und die zweistufige Verfahrensweise zu einer einstufigen Umsetzung vereinfacht werden. Dies ist aber nicht bevorzugt, so dass der Allophanatisierungskatalysator erst dann zugesetzt wird, wenn die Urethangruppen ganz oder anteilig zu Allophanatgruppen umgesetzt werden sollen.

Der Katalysator F) kann in einer Portion auf einmal oder aber auch portionsweise oder auch kontinuierlich zugegeben werden. Bevorzugt ist eine portionsweise oder kontinuierliche Zugabe, um Temperaturspitzen und dadurch indizierte unerwünschte Polymerisationsreaktionen der strahlenhärtenden Gruppen zu vermeiden.

Bevorzugt wird die Reaktion der Allophanatisierung solange geführt, bis der NCO-Gehalt des Produktes unter 0,5 Gew.-%, besonders bevorzugt unter 0,3 Gew.-% liegt.

Es ist grundsätzlich möglich, einen Restgehalt an NCO-Gruppen mit NCO-reaktiven Verbindungen wie z.B. Alkoholen nach beendeter Allophanatisierungsreaktion umzusetzen. Dadurch werden Produkte mit ganz besonders niedrigen NCO-Gehalten erhalten.

Es ist auch möglich die Katalysatoren D) und/oder F) nach dem Fachmann bekannten Methoden auf Trägermaterialien zu bringen und als heterogene Katalysatoren zu verwenden.

Im erfindungsgemäßen Verfahren können optional an beliebiger Stelle Lösemittel oder Reaktivverdünner eingesetzt werden.

Geeignete Lösemittel sind gegenüber den vorhandenen funktionellen Gruppen des Verfahrensprodukts vom Zeitpunkt der Zugabe bis zum Ende des Verfahrens inert. Geeignet sind z.B. in der Lacktechnik verwendete Lösemittel wie Kohlenwasserstoffe, Ketone und Ester, z.B. Toluol, Xylol, Isooctan, Aceton, Butanon, Methylisobutylketon, Ethylacetat, Butylacetat, Tetrahydrofuran, N-Methylpyrrolidon, Dimethylacetamid, Dimethylformamid, wobei jedoch bevorzugt kein Lösungsmittel zugesetzt wird.

Als Reaktivverdünner können Verbindungen mitverwendet werden, die bei der UV-Härtung ebenfalls (co)polymerisieren und somit in das Polymernetzwerk mit einbauen und gegenüber NCO-Gruppen inert sind. Solche Reaktivverdünner sind in P. K. T. Oldring (Ed.), Chemistry & Technology of UV & EB Formulations For Coatings, Inks & Paints, Vol. 2, 1991, SITA Technology, London, S. 237 - 285 exemplarisch beschrieben. Dies können Ester der Acrylsäure oder Methacrylsäure, bevorzugt der Acrylsäure mit mono- oder mehrfachfunktionellen Alkoholen sein. Als Alkohole eignen sich beispielsweise die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatischer Alkohole wie Phenoxyethanol und Nonylphenylethanol, sowie Tetrahydrofurfurylalkohole. Weiterhin können alkoxylierte Derivate dieser Alkohole verwendet werden. Geeignete zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Geeignete dreiwertige Alkohole sind Glycerin oder Trimethylolpropan oder deren alkoxylierte Derivate. Vierwertige Alkohole sind Pentaerythrit oder dessen alkoxylierte Derivate.

Die erfindungsgemäßen Bindemittel müssen gegen vorzeitige Polymerisation stabilisiert werden. Daher gibt man als Bestandteil von Komponente A) oder B) vor und/oder während der Reaktion Stabilisatoren zu, die die Polymerisation inhibieren. Bevorzugt ist dabei die Verwendung von Phenothiazin. Mögliche andere Stabilisatoren sind Phenole wie para-Methoxyphenol, 2,5-Di-tert.-Butylhydrochinon oder 2,6-Di-tert.-butyl-4-methylphenol. Geeignet sind auch N-Oxyl-Verbindungen zur Stabilisierung wie z.B. 2,2,6,6-Tetramethylpiperidin-N-Oxid (TEMPO) oder seine Derivate. Ebenso können die Stabilisatoren auch chemisch mit in das Bindemittel eingebaut werden, dabei eignen sich Verbindungen der oben genannten Klassen insbesondere wenn sie noch weitere freie aliphatische Alkoholgruppen oder primäre oder sekundäre Amingruppen tragen und damit über Urethan- oder Harnstoff Gruppen chemisch an Verbindungen der Komponente A) gebunden werden können. Hierfür besonders geeignet ist 2,2,6,6-Tetramethyl-4-hydroxy-piperidin-N-Oxid.

Andere Stabilisatoren wie z.B. Verbindungen der Klasse der HALS (HALS = hindered amine light stabilizers) werden dagegen weniger bevorzugt eingesetzt, da sie bekanntermaßen keine so effektive Stabilisierung zu ermöglichen und vielmehr zu einer "schleichenden" radikalischen Polymerisation ungesättigter Gruppen führen können.

Die Stabilisatoren sind so zu wählen, dass sie unter dem Einfluss der Katalysatoren D) und F) stabil sind und unter den Reaktionsbedingungen nicht mit einer Komponente des erfindungsgemäßen Verfahrens reagieren. Dies kann zum Verlust der Stabilisierungseigenschaft führen.

Zur Stabilisierung der Reaktionsmischung, insbesondere der ungesättigten Gruppen gegen vorzeitige Polymerisation, kann ein sauerstoffhaltiges Gas, bevorzugt Luft, in und/oder über das Reaktionsgemisch geleitet werden. Es ist bevorzugt, dass das Gas einen möglichst geringen Anteil an Feuchtigkeit besitzt, um unerwünschte Reaktionen bei Vorhandensein von Isocyanat zu verhindern.

In der Regel wird während der Herstellung der erfindungsgemäßen Bindemittel ein Stabilisator zugesetzt und abschließend um eine Langzeitstabilität zu erreichen nochmals mit einem phenolischen Stabilisator nachstabilisiert und ggf. mit Luft das Reaktionsprodukt gesättigt.

Im erfindungsgemäßen Verfahren wird die Stabilisatorkomponente typischerweise in Mengen von 0,001 bis 5,0 Gew.-%, bevorzugt 0,01 bis 2,0 Gew.-% und besonders bevorzugt 0,05 bis 1,0 Gew.-% bezogen auf Festgehalt des Verfahrensprodukts eingesetzt.

Das erfindungsgemäße Verfahren wird bei Temperaturen von höchstens 100°C, bevorzugt 20 bis 100°C, besonders bevorzugt von 40 bis 100°C, insbesondere bei 60 bis 90°C durchgeführt.

Es ist unerheblich, ob eine oder beide Stufen des erfindungsgemäßen Verfahrens kontinuierlich z.B. in einem Statik-Mischer, Extruder oder Kneter oder diskontinuierlich z.B. in einem Rührreaktor durchgeführt wird.

Bevorzugt wird das erfindungsgemäße Verfahren in einem Rührreaktor durchgeführt.

Der Verlauf der Reaktion kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehalts, des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Bevorzugt ist die IR-Kontrolle auf vorhandene freie NCO Gruppen (für aliphatische NCO-Gruppen, Bande bei ca. ν = 2272 cm⁻¹) und GC-Untersuchungen auf nicht umgesetzte Verbindungen aus A), B) und ggf. C).

Die nach dem erfindungsgemäßen Verfahren erhältlichen ungesättigten allophanathaltigen Prepolymere, insbesondere die auf Basis des bevorzugt eingesetzten HDI, weisen bevorzugt zahlenmittlere Molekulargewichte Mₙ von 1500 bis 5000 g/mol, besonders bevorzugt 2000 bis 4000 g/mol auf.

Die nach dem erfindungsgemäßen Verfahren erhältlichen ungesättigten allophanathaltigen Prepolymere weisen bevorzugt Gehalte an freien Diisocyanatmonomeren von unter 0,5 Gew.-%, besonders bevorzugt unter 0,1 Gew.-% auf.

Ein weiterer Gegenstand der Erfindung ist die Verwendung der erfindungsgemäßen Prepolymere bei der Herstellung von Beschichtungen, Lacken, Kleb- und Dichtstoffen sowie Druckfarben. Bevorzugt ist dabei die Verwendung in Lacken und Beschichtungen. Besonders bevorzugt ist die Verwendung in Beschichtungen für Kunststoffe und Metalle.

Ein weiterer Gegenstand der Erfindung sind Beschichtungsmittel enthaltend
a) ein oder mehrere der erfindungsgemäßen strahlenhärtenden, allophanathaltigen Prepolymere,
b) gegebenenfalls ein oder mehrere Polyisocyanate mit freien oder blockierten Isocyanatgruppen, die frei sind von unter Einwirkung aktinischer Strahlung mit ethylenisch ungesättigten Verbindungen unter Polymerisation reagierenden Gruppen,
c) gegebenenfalls weitere von a) verschiedene Verbindungen, die unter Einwirkung aktinischer Strahlung mit ethylenisch ungesättigten Verbindungen unter Polymerisation reagierende Gruppen und gegebenenfalls freie oder blockierte NCO-Gruppen aufweisen,
d) gegebenenfalls ein oder mehrere mit Isocyanaten reagierende, aktiven Wasserstoff enthaltende Verbindungen
e) gegebenenfalls Initiatoren und
f) gegebenenfalls Hilfs- und Zusatzstoffe.

Ein weiterer Gegenstand der Erfindung ist die Verwendung der erfindungsgemäßen Beschichtungsmittel enthaltend die nach dem erfindungsgemäßen Verfahren erhältlichen ungesättigten allophanathaltigen Prepolymere in Lacken, Kleb- und Dichtstoffen sowie Druckfarben. Besonders bevorzugt ist dabei die Verwendung der erfindungsgemäßen Bindemittel zur Beschichtung von Kunststoffen und Metallen.

Ein weiterer Gegenstand der Erfindung sind die mit dem erfindungsgemäßen Beschichtungsmittel beschichteten Gegenstände und Substrate.

Die Polyisocyanate der Komponente b) sind dem Fachmann an sich bekannt. Bevorzugt werden hier gegebenenfalls mit Isocyanurat-, Allophanat-, Biuret-, Uretdion- und/oder Iminooxadiazintriongruppen modifizierte Verbindungen auf Hexamethylendiisocyanat-, Isophorondiisocyanat-, 4,4'-Diisocyanatodicyclohexylmethan- und/oder Trimethylhexamethylendiisocyanat-Basis verwendet.

Die NCO-Gruppen können dabei auch blockiert sein.

Zu den Verbindungen der Komponente c) gehören Verbindungen wie insbesondere Urethanacrylate bevorzugt auf Hexamethylendiisocyanat-, Isophorondiisocyanat-, 4,4'-Diisocyanatodicyclohexylmethan- und/oder Trimethylhexamethylendiisocyanat-Basis, welche gegebenenfalls mit Isocyanurat-, Allophanat-, Biuret-, Uretdion- und/oder Iminooxadiazintriongruppen modifiziert sein können, welche keine gegenüber Isocyanatgruppen reaktive, aktiven Wasserstoff enthaltene Funktionen aufweisen.

NCO-haltige Urethanacrylate sind kommerziell bei der Bayer AG, Leverkusen, DE als Desmolux^{®} VP LS 2337, VP LS 2396 oder XP 2510 erhältlich. Ein NCO-haltiges Allophanaturethanacrylat ist von BASF AG, Ludwigshafen, DE als Laromer^{®} 9000 erhältlich.

Weiterhin können die bereits beschriebenen und in der Technik der strahlenhärtenden Beschichtungen bekannten Reaktivverdünner als Bestandteil von c) verwendet werden, sofern sie keine mit NCO-Gruppen reaktiven Gruppen enthalten.

Verbindungen der Komponente d) können gesättigt oder ungesättigt sein. Mit NCO-Gruppen reagierende chemische Funktionalitäten sind aktivierte Wasserstoffatome enthaltende Funktionalitäten wie Hydroxyl, Amin oder Thiol.

Bevorzugt sind gesättigte Polyhydroxyverbindungen, z.B. die an sich aus der Technolgie des Beschichtens, des Klebens, der Druckfarben oder der Dichtungsmassen bekannten Polyetherpolyole, Polyesterpolyole, Polycarbonatpolyole, Poly(meth)acrylatpolyole, Polyurethanpolyole, die keine unter Einwirkung aktinischer Strahlung mit ethylenisch ungesättigten Verbindungen unter Polymerisation reagierende Gruppen aufweisen.

Ungesättigte hydroxyfunktionelle Verbindungen sind z.B. die in der Technik der strahlenhärtenden Beschichtungen bekannten Epoxyacrylate, Polyesteracrylate, Polyetheracrylate, Urethanacrylate sowie acrylierte Polyacrylate, die eine OH-Zahl von 30 bis 300 mg KOH/g aufweisen.

Weiterhin können die bereits beschriebenen und in der Technik der strahlenhärtenden Beschichtungen bekannten Reaktivverdünner als Bestandteil von d) verwendet werden, sofern sie mit NCO-Gruppen reaktive Gruppen enthalten.

Als Initiatoren der Komponente e) für eine radikalische Polymerisation können durch Strahlung und/oder thermisch aktivierbare Initiatoren zum Einsatz kommen. Fotoinitiatoren, die durch UV-oder sichtbares Licht aktiviert werden, sind hierbei bevorzugt. Fotoinitiatoren sind an sich bekannte, kommerziell vertriebene Verbindungen, wobei zwischen unimolekularen (Typ I) und bimolekularen (Typ II) Initiatoren unterschieden wird. Geeignete (Typ I)-Systeme sind aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylphosphinoxide, Phenylglyoxylsäureester, Campherchinon, α-Aminoalkylphenone, α ,α-Dialkoxyacetophenone und α-Hydroxyalkylphenone.

Die Initiatoren, die in Mengen zwischen 0,1 und 10 Gew.-%, vorzugsweise 0,1 bis 5 Gew.-%, bezogen auf das Gewicht des Lackbindemittels, eingesetzt werden, können als einzelne Substanz oder, wegen häufiger vorteilhafter synergistischer Effekte, auch in Kombination miteinander verwendet werden.

Werden Elektronenstrahlen statt UV-Strahlung verwendet, so benötigt man keinen Photoinitiator. Elektronenstrahlung wird wie dem Fachmann bekannt ist, mittels thermischer Emission erzeugt und über eine Potentialdifferenz beschleunigt. Die energiereichen Elektronen schlagen dann durch eine Titanfolie und werden auf die zu härtenden Bindemittel gelenkt. Die allgemeinen Prinzipien der Elektronenstrahlhärtung sind in "Chemistry & Technology of UV & EB Formulations for Coatings, Inks & Paints", Vol. 1, P K T Oldring (Ed.), SITA Technology, London, England, S. 101-157, 1991 im Detail beschrieben.

Im Falle einer thermischen Härtung der aktivierten Doppelbindungen, kann diese auch unter Zusatz von thermisch zerfallenden Radikalbildnern erfolgen. Geeignet sind, wie dem Fachmann bekannt ist, z.B. Peroxyverbindungen wie Dialkoxydicarbonate wie z.B. Bis(4-tert-butylcyclohexyl)-peroxydicarbonat, Dialkylperoxide wie z.B. Dilaurylperoxid, Perester aromatischer oder aliphatischer Säuren wie z.B. tert.-Butylperbenzoat oder tert.-Amylperoxy 2-ethylhexanoat, anorganische Peroxide wie z.B. Ammoniumperoxodisulfat, Kaliumperoxodisulfat, organische Peroxide wie z.B. 2,2-Bis(tert.-butylperoxy)butan, Dicumylperoxid, tert.-Butylhydroperoxid oder auch Azoverbindungen wie 2,2'-Azobis[N-(2-propenyl)-2-methylpropionamide], 1-[(cyano-1-methylethyl)azo]-formamide, 2,2'-Azobis(N-butyl-2-methylpropionamide), 2,2'-Azobis(N-cyclohexyl-2-methyl-propionamide), 2,2'-Azobis {2-methyl-N-[2-(1-hydroxybutyl)]propionamide}, 2,2'-Azobis {2-methyl-N-[2-(1-hydroxybutyl)]propionamide, 2,2'-Azobis{2-methyl-N-[1,1-bis(hydroxymethyl)-2-hydroxyethyl] propionamide. Möglich sind auch hochsubstituierte 1,2-Diphenylethane (Benzpinakole), wie z.B. 3,4-Dimethyl-3,4-diphenylhexan, 1,1,2,2-Tetraphenyl-ethandiol-1,2 oder auch deren silylierten Derivate.

Es ist auch möglich eine Kombination von durch UV-Licht und thermisch aktivierbaren Initiatoren zu verwenden.

Zu den Hilfs- und Zusatzstoffen der Komponente f) gehören die im Rahmen des erfindungsgemäßen Verfahrens genannten Lösemittel.

Des Weiteren können in f) zur Erhöhung der Wetterstabilität der gehärteten Lackschicht auch UV-Absorber und/oder HALS-Stabilisatoren enthalten sein. Bevorzugt ist die Kombination. Erstere sollten einen Absorptionsbereich von maximal 390 nm haben wie Triphenyltriazintypen (z.B. Tinuvin^{®} 400 und 479 (Ciba Spezialitätenchemie GmbH, Lampertheim, DE)), Benztriazole wie Tinuvin^{®} 622 (Ciba Spezialitätenchemie GmbH, Lampertheim, DE) oder Oxalsäuredianilide (z.B. Sanduvor^{®} 3206 (Clariant, Muttenz, CH)) und werden in 0,5 bis 3,5 Gew.-% bezogen auf Festharz zugegeben. Geeignete HALS-Stabilisatoren sind kommerziell erhältlich (Tinuvin^{®} 292 oder Tinuvin^{®} 123 (Ciba Spezialitätenchemie GmbH, Lampertheim, DE) oder Sanduvor^{®} 3258 (Clariant, Muttenz, CH). Bevorzugte Mengen sind 0,5 bis 2,5 Gew.-% bezogen auf Festharz.

Ebenfalls können in f) Pigmente, Farbstoffe, Füllstoffe, Verlaufs- und Entlüftungsadditive enthalten sein.

Darüber hinaus können, sofern erforderlich die aus der Polyurethanchemie bekannten Katalysatoren zur Beschleunigung der NCO/OH-Reaktion in f) enthalten sein. Dies sind z.B. Zinn- oder Zinksalze oder Zinnorganoverbindungen, Zinn- und/oder Zinkseifen wie z.B. Zinnoctoat, Dibutylzinndilaurat, Dibutylzinnoxid oder tertiäre Amine wie z.B. Diazabicyclo[2,2,2]octan (DABCO).

Das Auftragen der erfindungsgemäßen Beschichtungsmittel auf das zu beschichtende Material erfolgt mit den in der Beschichtungstechnologie üblichen und bekannten Methoden wie Spritzen, Rakeln, Walzen, Gießen, Tauchen, Schleudern, Streichen oder Sprühen oder durch Druck-Techniken wie Sieb-, Tief-, Flexo- oder Offsetdruck sowie durch Transfer-Methoden.

Geeignete Substrate sind beispielsweise Holz, Metall, insbesondere auch Metall wie es in den Anwendungen der sogenannten Draht-, Coil-, Can- oder Container-Lackierung verwendet wird, weiterhin Kunststoff auch in Form von Folien, insbesondere ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, und UP (Kurzbezeichnungen nach DIN 7728T1), Papier, Leder, Textilien, Filz, Glas, Holz, Holzwerkstoffe, Kork, Linoleum, anorganisch gebundene Substrate wie Holz- und Faserzementplatten, elektronische Baugruppen oder mineralische Untergründe. Es können auch Substrate, die aus verschiedenen der vorgenannten Materialien bestehen, oder bereits beschichtete Substrate wie Fahrzeuge, Flugzeuge oder Schiffe sowie deren Teile, insbesondere Karosserien oder Anbauteile lackiert werden. Es ist auch möglich die Beschichtungsmittel nur temporär auf ein Substrat aufzubringen, dann teilweise oder vollständig zu härten und gegebenenfalls wieder abzulösen, um z.B. Folien herzustellen.

Zur Aushärtung können durch Ablüften oder andere gängige Methoden z.B. enthaltene Lösemittel ganz oder teilweise entfernt werden.

Anschließend oder gleichzeitig können der oder die ggf. notwendigen thermischen und der oder die photochemischen Aushärtungsprozesse nacheinander oder gleichzeitig durchgeführt werden.

Falls notwendig kann die thermische Härtung bei Raumtemperatur aber auch bei erhöhter Temperatur, vorzugsweise bei 40 bis 160°C, bevorzugte bei 60 bis 130°C, besonders bevorzugte bei 80 bis 110°C erfolgen.

Bei Verwendung von Photoinitiatoren in e) erfolgt die Strahlungshärtung bevorzugt durch Einwirkung energiereicher Strahlung, also UV-Strahlung oder Tageslicht, z.B. Licht der Wellenlänge 200 bis 700 nm. Als Strahlungsquellen für Licht oder UV-Licht dienen beispielsweise Hoch- oder Mitteldruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen, Licht-emittierende Dioden (LED) oder Excimerstrahler sind ebenfalls möglich. Die Strahler können bauartbedingt oder durch Einsatz spezieller Filter und/oder Reflektoren so ausgestattet sein, das der Austritt eines Teils des UV-Spektrums verhindert wird. Beispielsweise kann z.B. aus arbeitshygienischen Gründen die dem UV-C oder UV-C und UV-B zugeordnete Strahlung herausgefiltert werden. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z.B. unter InertgasAtmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise zu variieren.

Besonders bevorzugt werden zur Härtung Quecksilberhochdruckstrahler in ortsfesten Anlagen eingesetzt. Fotoinitiatoren werden dann in Konzentrationen von 0,1 bis 10 Gew.%, besonders bevorzugt 0,2 bis 3,0 Gew.-% bezogen auf den Festkörper der Beschichtung eingesetzt. Zur Härtung dieser Beschichtungen wird bevorzugt eine Dosis von 200 bis 3000 mJ/cm² gemessen im Wellenlängebereich von 200 bis 600 nm verwendet.

Erfolgt die Aushärtung durch Elektronenstrahlung kann auf Photoinitiatoren verzichtet werden. Die Härtung erfolgt durch Bestrahlen mit energiereichen Elektronen (Elektronenstrahlung, 150 bis 300 keV) nach bekannten Methoden unter Ausschluss von Sauerstoff, z.B. unter InertgasAtmosphäre oder unter Sauerstoff-reduzierter Atmosphäre. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Bei Verwendung von thermisch aktivierbaren Initiatoren in e) erfolgt die Härtung durch Erhöhung der Temperatur. Die thermische Energie kann dabei durch Strahlung, Wärmeleitung und/oder Konvektion in die Beschichtung eingebracht werden, wobei üblicherweise die in der Beschichtungstechnologie gebräuchlichen Infrarot-Strahler, Nahinfrarotstrahler und/oder Öfen zum Einsatz kommen.

Die applizierten Schichtdicken (vor der Härtung) liegen typischerweise zwischen 0,5 und 5000 µm, bevorzugt zwischen 5 und 1000 µm, besonders bevorzugt zwischen 15 und 200 µm. Bei Verwendung von Lösungsmitteln wird dieses nach der Applikation und vor der Härtung durch die gängigen Methoden entfernt.

### Beispiele

Alle Prozentangaben beziehen sich sofern nicht abweichend angegeben auf Gewichtsprozent.

Die Bestimmung der NCO-Gehalte in % wurde über Rücktitration mit 0,1 mol/l Salzsäure nach Reaktion mit Butylamin vorgenommen, Grundlage DIN EN ISO 11909.

Die Viskositätsmessungen wurden mit einem Platte-Platte Rotationsviskosimeter, RotoVisko 1 der Firma Haake, DE nach ISO/DIS 3219:1990 durchgeführt.

Die zur Zeit der Versuchsdurchführung herrschende Umgebungstemperatur von 23°C wird als RT bezeichnet.

Oxyester T1136^{®}: Polyester aus Adipinsäure, Hexandiol und Neopentylglykol, Handelsprodukt der Degussa AG, Marl

Desmophen^{®} 2028fl: Polyester aus Adipinsäure, Hexandiol und Neopentylglykol, Handelsprodukt der Bayer MaterialScience AG, Leverkusen

Desmophen^{®} 1652: Polyester aus Adipinsäure, Butandiol, Monoethylenglykol und Diethylenglykol , Handelsprodukt der Bayer MaterialScience AG, Leverkusen

Acclaim^{®}2200: Polyoxypropylenglykol (Mn= ca. 2000g/mol), Handelsprodukt der Bayer MaterialScience AG, Leverkusen

### Herstellung von Cholin-2-ethylhexanoat

In einem 1000 ml Glaskolben mit Rührvorrichtung wurden bei RT 83 g Natrium-2-ethylhexanoat in 600 ml Methanol gelöst. Es wurden anschließend 69,8 g Cholinchlorid portionsweise zugegeben, und die Mischung wurde weitere 10 Stunden bei Raumtemperatur gerührt. Der entstandene Niederschlag wurde abfiltriert und die Lösung am Rotationsverdampfer unter vermindertem Druck auf etwa ein Drittel eingeengt, bis sich erneut ein Niederschlag bildete. Es wurde mit etwa 400ml Aceton verdünnt, erneut filtriert und das Lösungsmittel unter vermindertem Druck wiederum abgezogen. Der verbleibende Rest wurde abermals in etwa 400 ml Aceton aufgenommen, filtriert und das Lösungsmittel abgezogen. Es wurden 117 g kristallisationsstabiles, flüssiges Produkt erhalten, das in dieser Form als Allophanatisierungskatalysator eingesetzt wurde.

### Beispiel 1: Erfindungsgemäßes allophanathaltiges Bindemittel auf Basis eines Polyesters

In einem 1000 ml-Vierhals-Glaskolben mit Rückflußkühler, beheizbarem Ölbad, mechanischem Rührer, Luftdurchleitung (l/h), Innenthermometer und Tropftrichter wurden 163,27 g Hexamethylendiisocyanat (Desmodur^{®} H, Bayer MaterialScience, Leverkusen) und 100 mg Phenothiazin vorgelegt und auf 70°C erwärmt. Es wurden 250 mg Dibutylzinndilaurat (Desmorapid Z, Bayer MaterialScience, Leverkusen) zugegeben, zunächst 147,23 g Hydroxypropylacrylat und dann 187,15 g Oxyester T1136^{®} so zugetropft, dass die Temperatur 80°C nicht überschritt. Es wurde nachgerührt, bis der theoretische NCO-Wert von 4,09 % erreicht war. Anschließend wurde die Temperatur auf 80°C erhöht, und es wurden über 2 Stunden 2,0 g Cholin-2-ethylhexanoat langsam zudosiert. Nach etwas mehr als der Hälfte der Zeit war eine leichte Exothermie zu verzeichnen. Die Dosierung wurde trotzdem zu Ende geführt, und es wurde noch zwei weitere Stunden nachgerührt. Es wurde ein farbloses Harz mit einem Rest-NCO-Gehalt von 0,05 % und einer Viskosität von 216.000 mPas (23°C) erhalten.

### Beispiel 2: Erfindungsgemäßes allophanathaltiges Bindemittel auf Basis eines Polyesters

In einem 1000 ml-Vierhals-Glaskolben mit Rückflusskühler, beheizbarem Ölbad, mechanischem Rührer, Luftdurchleitung (l/h), Innenthermometer und Tropftrichter wurden 108,66 g Hexamethylendiisocyanat (Desmodur^{®} H, Bayer MaterialScience, Leverkusen) und 100 mg Phenothiazin vorgelegt und auf 70°C erwärmt. Es wurden 250 mg Dibutylzinndilaurat (Desmorapid Z, Bayer MaterialScience, Leverkusen) zugegeben, zunächst 97,99 g Hydroxypropylacrylat und dann 215,75 g Desmophen^{®} 2028fl so zugetropft, dass die Temperatur 80°C nicht überschritt. Es wurde nachgerührt, bis der theoretische NCO-Wert von 3,20 % erreicht war. Anschließend wurde die Temperatur auf 80°C erhöht, und es wurden über 2 Stunden 2,0 g Cholin-2-ethylhexanoat langsam zudosiert. Nach etwas mehr als der Hälfte der Zeit war eine leichte Exothermie zu verzeichnen. Die Dosierung wurde trotzdem zu Ende geführt, und es wurde noch zwei weitere Stunden nachgerührt. Anschließend wurden 75 g eines Reaktivverdünners (Laromer^{®} 8887, BASF AG, Ludwigshafen) und 250 mg Stabilisator (Irganox^{®} 1076, Ciba Spezialitätenchemie, Basel) beigemengt und die Mischung homogenisiert. Es wurde ein farbloses Harz ohne einem Rest-NCO-Gehalt und einer Viskosität von 64.500 mPas (23°C) erhalten.

### Beispiel 3: Erfindungsgemäßes allophanathaltiges Bindemittel auf Basis eines Polyesters

In einem 1000 ml-Vierhals-Glaskolben mit Rückflusskühler, beheizbarem Ölbad, mechanischem Rührer, Luftdurchleitung (l/h), Innenthermometer und Tropftrichter wurden 168,85 g Hexamethylendiisocyanat (Desmodur^{®} H, Bayer MaterialScience, Leverkusen) und 160 mg Phenothiazin vorgelegt und auf 70°C erwärmt. Es wurden 400 mg Dibutylzinndilaurat (Desmorapid Z, Bayer MaterialScience, Leverkusen) zugegeben, zunächst 152,26 g Hydroxypropylacrylat und dann 354,72 g Desmophen^{®} 1652 so zugetropft, dass die Temperatur 80°C nicht überschritt. Es wurde nachgerührt, bis der theoretische NCO-Wert von 3,11 % erreicht war. Anschließend wurde die Temperatur auf 80°C erhöht, und es wurden über 4 Stunden 3,2 g Cholin-2-ethylhexanoat langsam zudosiert. Nach etwas mehr als der Hälfte der Zeit war eine leichte Exothermie zu verzeichnen. Die Dosierung wurde trotzdem zu Ende geführt, und es wurde noch zwei weitere Stunden nachgerührt. Anschließend wurden 120 g eines Reaktivverdünners (Laromer^{®} 8887, BASF AG, Ludwigshafen) und 400 mg Stabilisator (Irganox^{®} 1076, Ciba Spezialitätenchemie, Basel) beigemengt und die Mischung homogenisiert. Es wurde ein farbloses Harz mit einem Rest-NCO-Gehalt von 0,0 % und einer Viskosität von 61.000 mPas (23°C) erhalten.

### Beispiel 4: Erfindungsgemäßes allophanathaltiges Bindemittel auf Basis eines Polyethers

In einem 1000 ml-Vierhals-Glaskolben mit Rückflusskühler, beheizbarem Ölbad, mechanischem Rührer, Luftdurchleitung (1/h), Innenthermometer und Tropftrichter wurden 128,14 g Hexamethylendiisocyanat (Desmodur^{®} H, Bayer MaterialScience, Leverkusen) und 100 mg Phenothiazin vorgelegt und auf 70°C erwärmt. Es wurden 250 mg Dibutylzinndilaurat (Desmorapid Z, Bayer MaterialScience, Leverkusen) zugegeben, zunächst 115,55 g Hydroxypropylacrylat und dann 253,96 g Acclaim^{®} 2200 so zugetropft, dass die Temperatur 80°C nicht überschritt. Es wurde nachgerührt, bis der theoretische NCO-Wert von 3,21 % erreicht war. Anschließend wurde die Temperatur auf 80°C erhöht, und es wurden über 4 Stunden 2,0 g Cholin-2-ethylhexanoat langsam zudosiert. Nach etwas mehr als der Hälfte der Zeit war eine leichte Exothermie zu verzeichnen. Die Dosierung wurde trotzdem zu Ende geführt, und es wurde noch zwei weitere Stunden nachgerührt. Es wurde ein farbloses Harz mit einem Rest-NCO-Gehalt von 0 % und einer Viskosität von 48.000 mPas (23°C) erhalten.

### Beispiel 5: Erfindungsgemäßes allophanathaltiges Bindemittel auf Basis eines Polyesters mit Monoisocyanat-Modifikation

In einem 1000 ml-Vierhals-Glaskolben mit Rückflusskühler, beheizbarem Ölbad, mechanischem Rührer, Luftdurchleitung (l/h), Innenthermometer und Tropftrichter wurden 148,78 g Hexamethylendiisocyanat (Desmodur^{®} H, Bayer MaterialScience, Leverkusen) und 100 mg Phenothiazin vorgelegt und auf 70°C erwärmt. Es wurden 250 mg Dibutylzinndilaurat (Desmorapid Z, Bayer MaterialScience, Leverkusen) zugegeben, zunächst 119,84 g Hydroxyethylacrylat und dann 170,54 g Oxyester T1136^{®} so zugetropft, dass die Temperatur 80°C nicht überschritt. Es wurde nachgerührt, bis der theoretische NCO-Wert von 4,22 % erreicht war. Anschließend wurden 58,48 g Butylisocyanat (Lanxess, Leverkusen, DE, Gehalt an hydrolysierbarem Chlor ca. 100 ppm) beigefügt, die Temperatur auf 80°C erhöht, und es wurden über 4 Stunden 2,0 g Cholin-2-ethylhexanoat langsam zudosiert. Nach etwas mehr als der Hälfte der Zeit war eine deutliche Exothermie zu verzeichnen. Die Dosierung wurde trotzdem zu Ende geführt, und es wurde noch zwei weitere Stunden nachgerührt. Es wurde ein farbloses Harz mit einem Rest-NCO-Gehalt von 0,0 % und einer Viskosität von 75.000 mPas (23°C) erhalten.

### Vergleichsbeispiel 1: nicht erfindungsgemäßes allophanathaltiges Bindemittel ohne Diol

In einem 500 ml-Vierhals-Glaskolben mit Rückflusskühler, beheizbarem Ölbad, mechanischem Rührer, Luftdurchleitung (l/h), Innenthermometer und Tropftrichter wurden 231,16 g Hexamethylendiisocyanat (Desmodur^{®} H, Bayer MaterialScience, Leverkusen) und 50 mg Phenothiazin vorgelegt und auf 70°C erwärmt. Es wurden 25 mg Dibutylzinndilaurat (Desmorapid Z, Bayer MaterialScience, Leverkusen) zugegeben und 268,01 g Hydroxypropylacrylat so zugetropft, dass die Temperatur 80°C nicht überschritt. Es wurde nachgerührt, bis der theoretische NCO-Wert von 5,77 % erreicht war. Anschließend wurde die Temperatur auf 80°C erhöht, und es wurden über 6 Stunden 0,75 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch zwei weitere Stunden nachgerührt. Es wurde ein farbloses Harz mit einem Rest-NCO-Gehalt von 0,1 % und einer Viskosität von 75.400 mPas (23°C) erhalten.

### Vergleichsbeispiel 2: nicht erfindungsgemäßes allophanathaltiges Bindemittel ohne erhöhte Funktionalität

In einem 1000 ml-Vierhals-Glaskolben mit Rückflusskühler, beheizbarem Ölbad, mechanischem Rührer, Luftdurchleitung (l/h), Innenthermometer und Tropftrichter wurden 111,67 g Hexamethylendiisocyanat (Desmodur^{®} H, Bayer MaterialScience, Leverkusen, DE), 0,15 g Phenothiazin und 0,375 g Dibutylzinndilaurat (Desmorapid Z, Bayer MaterialScience, Leverkusen) vorgelegt und auf 70°C erwärmt. Es wurden dann 57,54 g Hydroxypropylacrylat und anschließend 491,72 g Oxyester T1136^{®} so zugetropft, dass die Temperatur 80°C nicht überschritt und gerührt, bis kein Rest-NCO mehr nachweisbar war. Anschließend wurden 87,79 g Butylisocyanat (Lanxess, Leverkusen, DE, Gehalt an hydrolysierbarem Chlor ca. 100 ppm) beigefügt, die Temperatur auf 80°C erhöht, und es wurden über 6 Stunden 2,25 g Cholin-2-ethylhexanoat langsam zudosiert. Nach etwas mehr als der Hälfte der Zeit war eine deutliche Exothermie zu verzeichnen, die eine Kühlung des Ansatzes nötig machte. Die Dosierung wurde trotzdem zu Ende geführt, und es wurde noch zwei weitere Stunden nachgerührt. Das farblose Harz hatte noch einen NCO-Gehalt von 0,46 %, der durch Zugabe von 2,63 g Methanol und Rühren über zwei Stunden bei 60°C abreagiert wurde. Es wurde ein farbloses Harz mit einem Rest-NCO-Gehalt von 0 % und einer Viskosität von 137.000 mPas (23°C) erhalten.

### Anwendungstechnische Beispiele:

Erfindungsgemäße allophanathaltige Bindemittel wurden mit den allophanathaltigen Bindemitteln der Vergleichsbeispiele auf Eignung in elektronenstrahlhärtenden Coil-Coating Decklacken getestet. Substrate waren Stahlbleche der Fa. Bonder (Gardobond^{®} WH 60 OHC), die mit einem Standard-1K-Polyurethan-Primer für Coil-Coating in 12 µm Schichtdicke beschichtet wurden. Die ausgehärteten Primer wurden mit Schleifpapier (Körnung 800) angeschliffen, bevor die jeweils in der Tabelle angegeben Decklacke mit einem Spiralrakel (Handcoater 3) aufgetragen und mit einem Elektronenstrahler (Fa. ESI, 50 kGy) gehärtet wurden. Die gehärteten Beschichtungen wurden nach 24 h auf ihre Elastizität/Haftung (Erichsentiefung: langsames Eindrücken einer Halbkugel von der Rückseite des beschichteten Blechs, Angabe mm bis zum Reißen der Beschichtung, max. Wert 9 mm; T-Bend Test EN 13523-7) und auf Lösemittelbeständigkeit mit Methylethylketon (Doppelhübe mit einem getränkten Wattebausch bei ca. 1 kg Andruck, Anzahl Doppelhübe, bis eine Veränderung der Oberfläche sichtbar wurde) getestet.

**Tabelle 1: Decklackformulierungen**

| **Beispiel:** | **6** | **7** | **8** | **9** | **10V** | **11V** | **12V** | **13V** | **14V** |
|---|---|---|---|---|---|---|---|---|---|
| Bsp. 1 | 40 | - | 40 | 40 | - | - | - | - | - |
| Bsp.5 | - | 40 | - | - | - | - | - | - | - |
| Vgl.-Bsp.2 | - | - | - | - | 40 | - | 20 | 20 | 20 |
| Vgl.-Bsp. 1 | - | - | - | - | - | 40 | 20 | 20 | 20 |
| CMFA | 55 | 55 | 55 | 55 | 55 | 55 | 55 | 25 | 55 |
| HDDA | - | - | - | - | - | - | - | 30 | - |
| Ebecryl 168 | 5 | 5 | 5 | 5 | 5 | 5 | 5 | 5 | 5 |
| Perenol S71UV | 0,2 | 0,2 | 0,2 | 0,2 | 0,2 | 0,2 | 0,2 | 0,2 | 0,2 |
| TiO₂ | - | - | 50 | 70 | - | - | - | - | 50 |

| | | | | | | | | | |
|---|---|---|---|---|---|---|---|---|---|
| CMFA- Cyclisches Trimethylolformal-monoacrylat HDDA - Hexandioldiacrylat Ebecryl® 168 - saurer Methacrylat-Haftvermittler (Fa. Cytec, Drogenbos, BE) Perenol® S71UV - Verlaufs- und Benetzungsadditiv (Fa. Cognis, Düsseldorf, DE) TiO₂ - Titandioxid Pigment R-KB-6 (Fa. Kerr-McGee, Krefeld, DE) | | | | | | | | | |

**Tabelle 2: Abprüfungen der gehärteten Decklackformulierungen**

| **Beispiel:** | **6** | **7** | **8** | **9** | **10V** | **11V** | **12V** | **13V** | **14V** |
|---|---|---|---|---|---|---|---|---|---|
| Schichtdicke [µm] | 20 | 20 | 22 | 20 | 22 | 20 | 23 | 22 | 21 |
| Oberflächenhärtung | OK | OK | OK | OK | OK | OK | OK | OK | OK |
| Haftung Gitterschnitt 0 - 5 | 0 | 0 | 0 | 0 | 0 | 0 | 0 | 0 | 0 |
| Erichsentiefung [mm] | 9 | >9 | >9 | >9 | >9 | 3 | >9 | 8 | >9 |
| T-Bend 0-2,5 | 0,5 | 1,0 | 1,0 | 1,0 | 1,5 | >2,5 | 1,5 | 2,5 | 1,5 |
| Lösemittel (MEK) [Doppelhübe] | >100 | >100 | >100 | >100 | 20 | >100 | 60 | 80 | 50 |

Die erfindungsgemäßen Beispiele 6 und 7 zeigen, dass mit den erfindungsgemäßen Prepolymeren einfach Decklacke für Coil-Coating Anwendungen formuliert werden können, die sehr gute Lösemittelbeständigkeit mit guter Elastizität im T-Bend-Test vereinen. Diese Formulierungen können wie in den Beispielen 8 und 9 gezeigt auch hoch pigmentiert werden, ohne dass Elastizität und Beständigkeit wesentlich verschlechtert werden.

In den Vergleichsbeispielen 10V-13V wird gezeigt, dass mit den bisher bekannten allophanathaltigen Urethanacrylaten diese Eigenschaften nicht eingestellt werden können. Die Formulierung 10V erfüllt zwar fast die Anforderung an die Elastizität (T-Bend), die Beständigkeiten gegen MEK sind jedoch unzureichend. Formulierung 11 V auf Basis des höherfunktionellen Allophanats nach Vergleichsbeispiel 1 erfüllt die Anforderungen der Lösemittelbeständigkeit, zeigt aber eine völlig unzureichende Elastizität. Die Kombination der Bindemittel aus den Vergleichsbeispielen 1 und 2 im Beispiel 12V ist in der Summe der Eigenschaften den erfindungsgemäßen Formulierungen immer noch deutlich unterlegen, woran auch die Formulierung mit difunktionellen Reaktivverdünner im Beispiel 13V nichts ändert. Wird die Formulierung 12V analog der Formulierung 8 pigmentiert (14V), sind Elastizität und Beständigkeit im Vergleich zu Formulierung 8 deutlich schlechter.

### Beispiel 15

Das Produkt nach Beispiel 1 wurde mit 3 Gew.-% Photoinitiator Darocur® 1173 (Ciba Spezialitätenchemie, Basel, CH) und 0,9 Gew.-% Verlaufsmittel Byk® 306 (Byk-Chemie, Wesel, DE) vermischt und mit Butylacetat auf Spritzviskosität (25 s Auslaufzeit im 4 mm Becher) eingestellt und auf per Spritzapplikation auf Polycarbonatplatten appliziert (Trockenschichtdicke ca. 25 µm). Die Beschichtung wurde im Umluftofen 5 min bei 60°C vom Lösemittel befreit und anschließend mit einem UV-Strahler (Quecksilber, 80 W/cm Lampenlänge) bei einer Bandgeschwindigkeit von 30 m/min gehärtet (Dosis 133 mJ/cm²).

Die gehärteten Beschichtungen waren lösemittelfest (>100 Doppelhübe MEK) und wiesen eine Pendelhärte von 103 s auf. Die Haftung nach Gitterschnitt wurde vor und nach einer einwöchigen Wasserlagerung mit 0 (unverändert) beurteilt.

Das Beispiel 15 zeigt, dass mit den erfindungsgemäßen Prepolymeren auch einfach gut haftende, hoch reaktive und beständige Beschichtungen auf Kunststoffen erzeugt werden können.

## Patentansprüche

1. Verfahren zur Herstellung strahlenhärtender, allophanathaltiger Prepolymere mit Restmonomergehalten von weniger als 0,5 Gew.-% und einem NCO-Gehalt von weniger als 1 Gew.-%, bei dem aus
A) Diisocyanaten,
B) hydroxyfunktionellen Verbindungen, die unter Einwirkung aktinischer Strahlung mit ethylenisch ungesättigten Verbindungen unter Polymerisation reagierende Gruppen (strahlenhärtende Gruppen) aufweisen und
C) Polyester-, Polyether- oder Polycarbonatpolyolen mit einer Funktionalität von mindestens 1,9 und einem zahlenmittleren Molekulargewicht (Mₙ) von mindestens 1.000 g/mol
D) gegebenenfalls in Anwesenheit eines Katalysators
NCO-gruppenhaltige Prepolymere mit strahlenhärtenden Gruppen gebildet werden, die anschließend
E) gegebenenfalls nach Zugabe von monofunktionellen Isocyanaten in Anwesenheit
F) eines Allophanatisierungskatalysators
zu allophanathaltigen Prepolymeren umgesetzt werden,
wobei das Verhältnis von NCO-Gruppen der Verbindungen aus A) zu den OH-Gruppen von den Verbindungen aus B) und C) 1,45 : 1,0 bis 1,1 : 1,0 beträgt und das Verhältnis der OH-Gruppen aus B) zu den OH-Gruppen aus C) 8,0 : 1 bis 1,5 : 1 beträgt.

2. Verfahren zur Herstellung von strahlenhärtenden, allophanathaltigen Prepolymeren gemäß Anspruch 1, **dadurch gekennzeichnet, dass** in Komponente A) Hexamethylendiisocyanat (HDI), Isophorondiisocyanat (IPDI) und/oder 4,4'-Diisocyanatodicyclohexylmethan eingesetzt werden.

3. Verfahren zur Herstellung von strahlenhärtenden, allophanathaltigen Prepolymeren gemäß Anspruch 1 oder 2, **dadurch gekennzeichnet, dass** in Komponente B) Hydroxyethyl(meth)-acrylat, Hydroxypropyl(meth)acrylat und/oder Hydroxybutyl(meth)acrylat eingesetzt werden.

4. Verfahren zur Herstellung von strahlenhärtenden, allophanathaltigen Prepolymeren gemäß einem der Ansprüche 1 bis 3, **dadurch gekennzeichnet, dass** in Komponente C) Polyester- oder Polyetherdiole mit einer Funktionalität von 1,9 bis 2,1 und einem mittleren Molekulargewicht (Mₙ) von 1.000 bis 4.000 g/mol eingesetzt werden.

5. Verfahren zur Herstellung von strahlenhärtenden, allophanathaltigen Prepolymeren gemäß einem der Ansprüche 1 bis 4, **dadurch gekennzeichnet, dass** das Verhältnis von NCO-Gruppen der Verbindungen aus A) zu den OH-Gruppen von den Verbindungen aus B) und C) 1,35 : 1,0 bis 1,3 : 1,0 beträgt.

6. Verfahren zur Herstellung von strahlenhärtenden, allophanathaltigen Prepolymeren gemäß einem der Ansprüche 1 bis 4, **dadurch gekennzeichnet, dass** das Verhältnis der OH-Gruppen aus B) zu den OH-Gruppen aus C) 5,0 : 1 bis 2,0 : 1 beträgt.

7. Verfahren zur Herstellung von strahlenhärtenden, allophanathaltigen Prepolymeren gemäß einem der Ansprüche 1 bis 6, **dadurch gekennzeichnet, dass** die Allophanatisierung solange geführt wird, bis das Endprodukt einen NCO-Gehalt von unter 0,3 Gewichtsprozent aufweist.

8. Strahlenhärtende, allophanathaltige Prepolymere erhältlich nach einem Verfahren gemäß einem der Ansprüche 1 bis 7.

9. Verwendung der strahlenhärtenden, allophanathaltigen Prepolymere gemäß Anspruch 8 bei der Herstellung von Beschichtungen, Lacken, Kleb- und Dichtstoffen, sowie Druckfarben.

10. Verwendung der strahlenhärtenden, allophanathaltigen Prepolymere gemäß Anspruch 8 als Bindemittel zur Beschichtung von Metallen und Kunststoffe.

11. Beschichtungsmittel enthaltend
a) ein oder mehrere der strahlenhärtenden, allophanathaltigen Prepolymere gemäß Anspruch 8,
b) gegebenenfalls ein oder mehrere Polyisocyanate mit freien oder blockierten Isocyanatgruppen, die frei sind von unter Einwirkung aktinischer Strahlung mit ethylenisch ungesättigten Verbindungen unter Polymerisation reagierenden Gruppen,
c) gegebenenfalls weitere von a) verschiedene Verbindungen, die unter Einwirkung aktinischer Strahlung mit ethylenisch ungesättigten Verbindungen unter Polymerisation reagierende Gruppen und gegebenenfalls freie oder blockierte NCO-Gruppen aufweisen,
d) gegebenenfalls ein oder mehrere mit Isocyanaten reagierende, aktiven Wasserstoff enthaltende Verbindungen
e) gegebenenfalls Initiatoren und
f) gegebenenfalls Hilfs- und Zusatzstoffe.

12. Substrate beschichtet mit Beschichtungen erhältlich unter Verwendung von strahlenhärtenden, allophanathaltigen Prepolymeren gemäß Anspruch 8.

## Claims

1. Process for preparing radiation-curing allophanate-containing prepolymers having residual monomer contents of less than 0.5% by weight and an NCO content of less than 1% by weight, wherein
A) diisocyanates,
B) hydroxy-functional compounds which contain groups which react, with polymerization, with ethylenically unsaturated compounds on exposure to actinic radiation (radiation-curing groups) and
C) polyester, polyether or polycarbonate polyols having a functionality of at least 1.9 and a number-average molecular weight (Mₙ) of at least 1000 g/mol
D) optionally in the presence of a catalyst
are used to form NCO-group-containing prepolymers having radiation-curing groups, which are subsequently reacted
E) optionally after addition of monofunctional isocyanates
in the presence
F) of an allophanatization catalyst
to give allophanate-containing prepolymers,
the ratio of NCO groups of the compounds from A) to the OH groups of the compounds from B) and C) being 1.45 : 1.0 to 1.1 : 1.0 and the ratio of the OH groups from B) to the OH groups from C) being 8.0 : 1 to 1.5 : 1.

2. Process for preparing radiation-curing allophanate-containing prepolymers according to Claim 1, **characterized in that** in component A) hexamethylene diisocyanate (HDI), isophorone diisocyanate (IPDI) and/or 4,4'-diisocyanatodicyclohexylmethane are used.

3. Process for preparing radiation-curing allophanate-containing prepolymers according to Claim 1 or 2, **characterized in that** in component B) hydroxyethyl (meth)acrylate, hydroxypropyl (meth)acrylate and/or hydroxybutyl (meth)acrylate are used.

4. Process for preparing radiation-curing allophanate-containing prepolymers according to any one of Claims 1 to 3, **characterized in that** in component C) polyester diols or polyether diols having a functionality of 1.9 to 2.1 and an average molecular weight (Mₙ) of 1000 to 4000 g/mol are used.

5. Process for preparing radiation-curing allophanate-containing prepolymers according to any one of Claims 1 to 4, **characterized in that** the ratio of NCO groups of the compounds from A) to the OH groups of the compounds from B) and C) is 1.35 : 1.0 to 1.3 : 1.0.

6. Process for preparing radiation-curing allophanate-containing prepolymers according to any one of Claims 1 to 4, **characterized in that** the ratio of the OH groups from B) to the OH groups from C) is 5.0 : 1 to 2.0 : 1.

7. Process for preparing radiation-curing allophanate-containing prepolymers according to any one of Claims 1 to 6, **characterized in that** the allophanatization is carried out until the end product has an NCO content of below 0.3 per cent by weight.

8. Radiation-curing allophanate-containing prepolymers obtainable by a process according to any one of Claims 1 to 7.

9. Use of the radiation-curing allophanate-containing prepolymers according to Claim 8 in the preparation of coatings, coating materials, adhesives, sealants and printing inks.

10. Use of the radiation-curing allophanate-containing prepolymers according to Claim 8 as binders for the coating of metals and plastics.

11. Coating compositions comprising
a) one or more of the radiation-curing allophanate-containing prepolymers according to Claim 8,
b) optionally one or more polyisocyanates containing free or blocked isocyanate groups, which are free from groups which react, with polymerization, with ethylenically unsaturated compounds on exposure to actinic radiation,
c) optionally other compounds, different from those of a), which contain groups which react, with polymerization, with ethylenically unsaturated compounds on exposure to actinic radiation, and optionally contain free or blocked NCO groups,
d) optionally one or more isocyanate-reactive compounds containing active hydrogen,
e) optionally initiators and
f) optionally auxiliaries and additives.

12. Substrates coated with coatings obtainable using radiation-curing allophanate-containing prepolymers according to Claim 8.

## Revendications

1. Procédé pour la préparation de prépolymères contenant des allophanates, durcissant sous l'effet de rayons, présentant des teneurs résiduelles en monomères inférieures à 0,5% en poids et une teneur en NCO inférieure à 1% en poids, dans lequel on forme, à partir
A) de diisocyanates,
B) de composés à fonctionnalité hydroxy, qui présentent des groupes réagissant avec polymérisation sous l'effet d'un rayonnement actinique avec des composés éthyléniquement insaturés (groupes durcissant sous l'effet de rayons) et
C) de polyesterpolyols, de polyétherpolyols ou de polycarbonatepolyols présentant une fonctionnalité d'au moins 1,9 et un poids moléculaire numérique moyen (Mₙ) d'au moins 1000 g/mole,
D) le cas échéant en présence d'un catalyseur,
des prépolymères contenant des groupes NCO présentant des groupes durcissant sous l'effet de rayons, qui sont ensuite transformés,
E) le cas échéant après addition d'isocyanates monofonctionnels, en présence
F) d'un catalyseur de transformation en allophanates
en prépolymères contenant des allophanates,
le rapport des groupes NCO des composés de A) aux groupes OH des composés de B) et C) valant 1,45:1,0 à 1,1:1,0 et le rapport des groupes OH de B) aux groupes OH de C) valant 8,0:1 à 1,5:1.

2. Procédé pour la préparation de prépolymères contenant des allophanates, durcissant sous l'effet de rayons, selon la revendication 1, **caractérisé en ce qu'**on utilise, dans le composant A), de l'hexaméthylènediisocyanate (HDI), de l'isophoronediisocyanate (IPDI) et/ou du 4,4'-diisocyanatodicyclohexylméthane.

3. Procédé pour la préparation de prépolymères contenant des allophanates, durcissant sous l'effet de rayons, selon la revendication 1 ou 2, **caractérisé en ce qu'**on utilise, dans le composant B), du (méth)acrylate d'hydroxyéthyle, du (méth)acrylate d'hydroxypropyle et/ou du (méth)acrylate d'hydroxybutyle.

4. Procédé pour la préparation de prépolymères contenant des allophanates, durcissant sous l'effet de rayons, selon l'une quelconque des revendications 1 à 3, **caractérisé en ce qu'**on utilise, dans le composant C), des polyesterdiols ou des polyétherdiols présentant une fonctionnalité de 1,9 à 2,1 et un poids moléculaire numérique moyen (Mₙ) de 1000 à 4000 g/mole.

5. Procédé pour la préparation de prépolymères contenant des allophanates, durcissant sous l'effet de rayons, selon l'une quelconque des revendications 1 à 4, **caractérisé en ce que** le rapport des groupes NCO des composés de A) aux groupes OH des composés de B) et C) est de 1,35:1,0 à 1,3:1,0.

6. Procédé pour la préparation de prépolymères contenant des allophanates, durcissant sous l'effet de rayons, selon l'une quelconque des revendications 1 à 4, **caractérisé en ce que** le rapport des groupes OH de B) aux groupes OH des composés de C) est de 5,0:1 à 2,0:1.

7. Procédé pour la préparation de prépolymères contenant des allophanates, durcissant sous l'effet de rayons, selon l'une quelconque des revendications 1 à 6, **caractérisé en ce que** la transformation en allophanates est réalisée jusqu'à ce que le produit fini présente une teneur en NCO inférieure à 0,3% en poids.

8. Prépolymères contenant des allophanates, durcissant sous l'effet de rayons, pouvant être obtenus selon un procédé selon l'une quelconque des revendications 1 à 7.

9. Utilisation des prépolymères contenant des allophanates, durcissant sous l'effet de rayons, selon la revendication 8 lors de la fabrication de revêtements, de laques, d'adhésifs et de substances d'étanchéité ainsi que d'encres d'impression.

10. Utilisation des prépolymères contenant des allophanates, durcissant sous l'effet de rayons, selon la revendication 8 comme liant pour le revêtement de métaux et de matériaux synthétiques.

11. Agents de revêtement, contenant
a) un ou plusieurs des prépolymères contenant des allophanates, durcissant sous l'effet de rayons, selon la revendication 8,
b) le cas échéant un ou plusieurs polyisocyanates avec des groupes isocyanate libres ou bloqués, qui sont exempts de groupes réagissant avec polymérisation sous l'effet d'un rayonnement actinique avec des composés éthyléniquement insaturés,
c) le cas échéant d'autres composés différents de ceux de a), qui présentent des groupes réagissant avec polymérisation sous l'effet d'un rayonnement actinique avec des composés éthyléniquement insaturés et le cas échéant des groupes NCO libres ou bloqués,
d) le cas échéant un ou plusieurs composés réactifs avec isocyanate, contenant de l'hydrogène actif,
e) le cas échéant des initiateurs et
f) le cas échéant des adjuvants et des additifs.

12. Substrats revêtus par des revêtements pouvant être obtenus avec utilisation de prépolymères contenant des allophanates, durcissant sous l'effet de rayons, selon la revendication 8.
